# EUROPÄISCHE PATENTSCHRIFT

(11) **EP 2 649 567 B1**
(45) Veröffentlichungstag und Bekanntmachung des Hinweises auf die Patenterteilung: **17.08.2016**
(21) Anmeldenummer: 11785653.4
(22) Anmeldetag: 16.11.2011
(51) Int. Cl.: G06N 3/04

(54) **VERFAHREN ZUR RECHNERGESTÜTZTEN MODELLIERUNG EINES TECHNISCHEN SYSTEMS**
METHOD FOR THE COMPUTER-BASED MODELING OF A TECHNICAL SYSTEM
PROCÉDÉE POUR LA MODÉLISATION SUR ORDINATEUR D'UN SYSTÈME TECHNIQUE

(30) Priorität: 10.12.2010 DE 102010062832
(43) Veröffentlichungstag der Anmeldung: 16.10.2013
(73) Patentinhaber: Siemens Aktiengesellschaft, 80333 München (DE)
(72) Erfinder: DÜLL, Siegmund, 81549 München (DE); HANS, Alexander, 38106 Braunschweig (DE); UDLUFT, Steffen, 82223 Eichenau (DE)
(86) Internationale Anmeldenummer: PCT/EP2011/070243
(87) Internationale Veröffentlichungsnummer: WO 2012/076306

(56) Entgegenhaltungen:
- US-A- 5 857 321
- ANTON MAXIMILIAN SCHAEFER ET AL: "A Neural Reinforcement Learning Approach to Gas Turbine Control", NEURAL NETWORKS, 2007. IJCNN 2007. INTERNATIONAL JOINT CONFERENCE ON, IEEE, PISCATAWAY, NJ, USA, 1. August 2007 (2007-08-01), Seiten 1691-1696, XP031154848, ISBN: 978-1-4244-1379-9
- DREYFUS, G.: "Neural networks: methodology and applications", 2005, SPRINGER, XP002668620, ISBN: 3-540-22980-9 Seiten 1-497, in der Anmeldung erwähnt Seite 1 - Seite 50 Seite 203 - Seite 327
- PETERSON C ET AL: "JETNET 3.0-A versatile artificial neural network package", COMPUTER PHYSICS COMMUNICATION, ELSEVIER SCIENCE PUBLISHERS B.V., AMSTERDAM, NL, Bd. 81, Nr. 1-2, 1. Juni 1994 (1994-06-01) , Seiten 185-220, XP023140219, ISSN: 0010-4655, DOI: 10.1016/0010-4655(94)90120-1 [gefunden am 1994-06-01] in der Anmeldung erwähnt
- WILLIAM DOUGLAS ET AL: 'PERFORMANCE OF JUMP CONNECTION NEURAL NETWORKS APPLIED TO SIMPLIFIED PATTERN RECOGNITION PROBLEM' JOURNAL OF COMPUTING SCIENCES IN COLLEGES, [Online] Bd. 15, Nr. 3, 01 Januar 1999, Seiten 259 - 265, XP055113203 Gefunden im Internet: <URL:http://ccscjournal.willmitchell.info/V ol15-99/No3/William Douglas.pdf> [gefunden am 2014-04-09]

## Beschreibung

Die Erfindung betrifft ein Verfahren zur rechnergestützten Modellierung eines technischen Systems sowie ein Verfahren zum rechnergestützten Schätzen von Zuständen eines technischen Systems und ein entsprechendes Computerprogrammprodukt.

Aus dem Stand der Technik ist es bekannt, zur Modellierung eines technischen Systems künstliche neuronale Netze einzusetzen, welche basierend auf Trainingsdaten umfassend entsprechende Zustände des technischen Systems gelernt werden. Das gelernte neuronale Netz eignet sich dann zur Schätzung bzw. Prognose von Zuständen des technischen Systems.

Neuronale Netze ermöglichen die Vorhersage von Zuständen einer Ausgangsschicht basierend auf Zuständen einer Eingangsschicht, wobei zwischen Ausgangsschicht und Eingangsschicht eine oder mehrere Neuronenschichten mit versteckten Zuständen vorgesehen sind. Je größer die Anzahl der verwendeten versteckten Schichten ist, desto genauer kann ein technisches System über das Lernen eines neuronalen Netzes modelliert werden. Dabei besteht jedoch das Problem, dass herkömmliche überwachte Lernverfahren, insbesondere das Gradientenabstiegsverfahren, für neuronale Netze mit einer Vielzahl von versteckten Schichten ungeeignet sind. Demzufolge werden neuronale Netze mit einer Vielzahl von versteckten Schichten oftmals schichtweise mit unüberwachten Lernverfahren gelernt, wobei anschließend mit einem Gradientenabstiegsverfahren die Anpassung an die tatsächlichen Zustände gemäß den Trainingsdaten erfolgt.

Die Druckschrift PETERSON, C. et al.: JETNET 3.0-A versatile artificial neural network package, Computer physics communications, Vol. 81, 1993, No. 1-2, S. 185-220 betrifft die Beschreibung eines Programmpakets, welches auf neuronalen Netzen beruht. Dabei wird auch die Verwendung von sogenannten Skip-Layer-Netzen umfassend Skip-Layer-Verbindungen beschrieben.

Die Druckschrift ROSENBERG, A.: Lecture 14 - Neural Networks. Machine Learning. Queens College (CUNY), New York, USA, März 2010, offenbart die Struktur eines Skip-Layer-Netzes, in dem eine Eingangsschicht über Konnektoren direkt mit einer Ausgangsschicht verbunden ist.

In der Druckschrift REYFUS G.: Neural networks: methodology and applications. 2. Auflage. Berlin: Springer, 2005. S. i, iii-xvi, 1-11, 171-186 ist u.a. offenbart, wie ein rekurrentes neuronales Netz in der kanonischen Form eines Feed-Forward-Netzes dargestellt werden kann. Einige Ausgaben dieses Feed-Forward-Netzes werden zu den Eingaben des Netzes zurückgeführt.

Die Druckschrift US 5 857 321 A offenbart ein Steuersystem für eine Gasturbine, welches einen Schätzer basierend auf wenigstens einem neuronalen Netz umfasst, welches trainiert ist, um einen Betriebszustand der Turbine über Messsignale vorherzusagen. Das neuronale Netz kann als Feed-Forward-Struktur mit mehreren versteckten Neuronenschichten ausgestaltet sein.

Das Dokument Anton Maximilian Schaefer et al.: "A Neural Reinforcement Learning Approach to Gas Turbine Control", Neural Networks, 2007, IJCNN 2007, International Joint Conference On, IEEE, Piscataway, NJ, USA, 1. August 2007, Seiten 1691 bis 1696, offenbart das Lernen einer Netzstruktur aus einem rekurrenten neuronalen Netz in Kombination mit einem weiteren neuronalen Netz. Die gelernte Netzstruktur wird zur Steuerung einer Gasturbine verwendet.

Das Dokument William Douglas et al.: "PERFORMANCE OF JUMP CONNECTION NEURAL NETWORKS APPLIED TO SIMPLIFIED PATTERN RECOGNITION PROBLEM", Journal of Computing Sciences in Colleges Vol. 15 No. 3, 1. Januar 1999, Seiten 259 - 265, beschreibt neuronale Netze in der Form von Jump-Layer-Netzen. In dieser Druckschrift sind Netzstrukturen mit einer Eingangsschicht, einer Ausgangsschicht und mehreren versteckten Schichten gezeigt, wobei eine versteckte Schicht unter anderem mit einer anderen versteckten Schicht und der Ausgangsschicht verbunden ist.

Aufgabe der Erfindung ist es, eine einfache und genaue Modellierung eines technischen Systems basierend auf einem rechnergestützten Verfahren mit einem neuronalen Netz zu schaffen.

Diese Aufgabe wird durch die unabhängigen Patentansprüche gelöst. Weiterbildungen der Erfindung sind in den abhängigen Ansprüchen gelöst.

Das erfindungsgemäße Verfahren dient zur rechnergestützten Modellierung eines technischen Systems, dessen Betrieb für eine Vielzahl von Betriebspunkten jeweils durch einen ersten Zustandsvektor mit einer oder mehreren ersten Zustandsvariablen und durch einen zweiten Zustandsvektor mit einer oder mehreren zweiten Zustandsvariablen beschrieben wird. Das technische System wird durch das Lernen eines neuronalen Netzes umfassend zumindest ein Feed-Forward-Netz basierend auf Trainingsdaten aus bekannten ersten und zweiten Zustandsvektoren für mehrere Betriebspunkte modelliert. Feed-Forward-Netze leiten Neuronenausgaben nur in eine Verarbeitungsrichtung weiter. Das im erfindungsgemäßen Verfahren verwendete zumindest eine Feed-Forward-Netz enthält mehrere Neuronenschichten, welche eine Eingangsschicht, eine oder mehrere versteckte Schichten und eine Ausgangsschicht umfassen. Diese Schichten enthalten Zustandsvektoren in der Form von entsprechenden Neuronenclustern aus einem oder mehreren Neuronen. Die Neuronenschichten sind untereinander über sog. Konnektoren mit jeweiligen Gewichten in der Form von Gewichtsmatrizen verbunden. Ferner ist die Eingangsschicht mit zumindest einem ersten Zustandsvektor und die Ausgangsschicht mit zumindest einem zweiten Zustandsvektor verknüpft. Der Begriff der Verknüpfung der Eingangsschicht mit dem zumindest einen ersten Zustandsvektor bzw. der Ausgangsschicht mit dem zumindest einen zweiten Zustandsvektor ist weit zu verstehen. Insbesondere kann der zumindest eine erste Zustandsvektor Teil der Eingangsschicht sein bzw. diese repräsentieren. Das Gleiche gilt für den zumindest einen zweiten Zustandsvektor, der Teil der Ausgangsschicht sein kann bzw. diese repräsentieren kann. Ebenso besteht die Möglichkeit, dass der zumindest eine erste Zustandsvektor einer Vorverarbeitung unterzogen wird, wobei der sich daraus ergebende vorverarbeitete Vektor dann Teil der Eingangsschicht ist. Wie weiter unten näher beschrieben, kann beispielsweise der erste Zustandsvektor über ein rekurrentes neuronales Netz in einen versteckten Zustandsvektor gewandelt werden, der dann die Eingangsschicht des Feed-Forward-Netzes repräsentiert. Analog besteht auch die Möglichkeit, dass die Ausgangsschicht noch nicht den zumindest einen zweiten Zustandsvektor repräsentiert, sondern dieser in einem separaten Nachverarbeitungsschritt generiert wird.

Das erfindungsgemäße Verfahren zeichnet sich durch eine spezielle Struktur des verwendeten Feed-Forward-Netzes aus. Gemäß dieser Struktur ist zumindest ein Konnektor ein Überbrückungskonnektor, der eine Neuronenschicht unter Überbrückung zumindest einer versteckten Schicht mit der Ausgangsschicht verbindet. Durch diese zusätzlichen Überbrückungskonnektoren wird ein einfaches und effizientes Lernen des zumindest einen Feed-Forward-Netzes auch für eine große Anzahl von versteckten Schichten erreicht, wobei gleichzeitig eine gute Modellierungsqualität gewährleistet ist. In einer bevorzugten Ausführungsform umfasst das zumindest eine Feed-Forward-Netz fünf oder mehr und vorzugsweise acht oder mehr und besonders bevorzugt 40 oder mehr Schichten. Die Netzstruktur kann dabei in einfacher Weise mit an sich bekannten Lernverfahren, wie z.B. dem Gradientenabstiegsverfahren und insbesondere dem Error-Backpropagation-Verfahren gelernt werden. Dabei muss das rückpropagierte Fehlersignal aufgrund des oder der Überbrückungskonnektoren nicht alle Schichten oberhalb einer bestimmten Schicht durchlaufen, bis die Gewichte der bestimmten Schicht beeinflusst werden.

Erfindungsgemäß umfasst das zumindest eine Feed-Forward-Netz eine Mehrzahl von versteckten Schichten, wobei jede nicht direkt mit der Ausgangsschicht verbundene versteckte Schicht über einen Überbrückungskonnektor mit der Ausgangsschicht verbunden ist. Auf diese Weise wird sichergestellt, dass für alle versteckten Schichten eine direkte Verbindung zu der Ausgangsschicht gewährleistet ist. In einer weiteren Ausgestaltung ist auch die Eingangsschicht des zumindest einen Feed-Forward-Netzes über einen Überbrückungskonnektor mit der Ausgangsschicht verbunden.

Im erfindungsgemäßen Verfahren wird mit dem neuronalen Netz das dynamische Verhalten des technischen Systems für eine Vielzahl von zeitlich aufeinander folgenden Betriebspunkten des Systems modelliert. Dies wird dadurch erreicht, dass neben dem zumindest einen Feed-Forward-Netz ein rekurrentes neuronales Netz verwendet wird, welches mit dem zumindest einen Feed-Forward-Netz gekoppelt ist. Das rekurrente neuronale Netz umfasst dabei eine Eingangsschicht und eine rekurrente versteckte Schicht, bei der die versteckten Zustandsvektoren im Unterschied zu einem Feed-Forward-Netz auch innerhalb der Schicht über Konnektoren verbunden sind. Die Eingangsschicht des rekurrenten neuronalen Netzes beinhaltet erste Zustandsvektoren zu zeitlich aufeinander folgenden Betriebspunkten des technischen Systems umfassend einen aktuellen und einen oder mehrere vergangene Betriebspunkte, wobei jeder erste Zustandsvektor zum jeweiligen Betriebspunkt der Eingangsschicht des rekurrenten neuronalen Netzes über einen Konnektor mit entsprechendem Gewicht mit einem versteckten Zustandsvektor zum jeweiligen gleichen Betriebspunkt der rekurrenten versteckten Schicht des rekurrenten neuronalen Netzes verbunden ist. Ferner repräsentiert der versteckte Zustandsvektor zum aktuellen Betriebspunkt die Eingangsschicht eines des zumindest einen Feed-Forward-Netzes, wohingegen die Ausgangsschicht dieses Feed-Forward-Netzes den zweiten Zustandsvektor zum aktuellen Betriebspunkt repräsentiert.

In einer besonders bevorzugten Ausführungsform des soeben beschriebenen neuronalen Netzes, welches neben dem Feed-Forward-Netz ein rekurrentes neuronales Netz verwendet, können in geeigneter Weise auch Zustandsvektoren für einen oder mehrere zukünftige Betriebspunkte des technischen Systems modelliert werden, um diese anschließend mit dem gelernten neuronalen Netz in geeigneter Weise zu prognostizieren. Um dies zu erreichen, umfasst die Eingangsschicht des rekurrenten neuronalen Netzes ferner einen oder mehrere erste Zustandsvektoren zu zeitlich aufeinander folgenden zukünftigen Betriebspunkten des technischen Systems und jeder erste Zustandsvektor zu einem zukünftigen Betriebspunkt ist über einen Konnektor mit entsprechendem Gewicht mit einem versteckten Zustandsvektor zu dem zukünftigen Betriebspunkt der rekurrenten versteckten Schicht des rekurrenten neuronalen Netzes verbunden. Dabei bildet jeder versteckte Zustandsvektor zu einem zukünftigen Betriebspunkt die Eingangsschicht eines des zumindest einen Feed-Forward-Netzes für den zukünftigen Betriebspunkt, wobei die Ausgangsschicht jedes Feed-Forward-Netzes für einen zukünftigen Betriebspunkt den zweiten Zustandsvektor zu dem zukünftigen Betriebspunkt repräsentiert.

Die soeben beschriebene Ausführungsform umfasst somit mehrere Feed-Forward-Netze zum aktuellen Betriebspunkt und zu einem oder mehreren zukünftigen Betriebspunkten. Ein besonders recheneffizientes Lernen dieses neuronalen Netzes wird in einer bevorzugten Ausführungsform dadurch erreicht, dass die Konnektoren aller Feed-Forward-Netze, welche einander entsprechende Neuronenschichten verbinden, die gleichen Gewichte aufweisen. Vorzugsweise weisen auch die Konnektoren zwischen der Eingangsschicht des rekurrenten neuronalen Netzes und der rekurrenten versteckten Schicht des rekurrenten neuronalen Netzes zu vergangenen Betriebspunkten die gleichen ersten Gewichte auf. Ebenso weisen vorzugsweise die Konnektoren zwischen der Eingangsschicht des rekurrenten neuronalen Netzes und der rekurrenten versteckten Schicht des rekurrenten neuronalen Netzes zum aktuellen und zu zukünftigen Betriebspunkten die gleichen zweiten Gewichte auf.

In einer weiteren bevorzugten Ausführungsform weisen die Konnektoren der versteckten rekurrenten Schicht des rekurrenten neuronalen Netzes, welche sich aus versteckten Zustandsvektoren zu vergangenen Betriebspunkten erstrecken, die gleichen dritten Gewichte auf. Analog weisen vorzugsweise die Konnektoren der versteckten rekurrenten Schicht des rekurrenten neuronalen Netzes, welche sich in versteckte Zustandsvektoren zu zukünftigen Betriebspunkten erstrecken, die gleichen vierten Gewichte auf.

Das erfindungsgemäße Verfahren kann zur Modellierung von beliebigen technischen Systemen eingesetzt werden. Ein besonders bevorzugter Anwendungsfall ist dabei die Modellierung eines technischen Systems in der Form einer Turbine, insbesondere einer Gasturbine, wobei die Gasturbine vorzugsweise einen Generator zur Erzeugung von elektrischer Energie aus fossilen Brennstoffen darstellt.

Wird eine Gasturbine als technisches System modelliert, so umfassen die ersten Zustandsvektoren entsprechende Umweltgrößen bzw. veränderbare Stellgrößen der Gasturbine. Vorzugsweise beinhalten die ersten Zustandsvektoren der Gasturbine eine oder mehrere der folgenden Zustandsvariablen:
einen oder mehrere Temperaturwerte an oder in der Gasturbine, insbesondere einen oder mehrere Brenngastemperaturwerte, einen oder mehrere Gasdruckwerte an oder in der Gasturbine, insbesondere einen oder mehrere Brenngasdruckwerte, einen oder mehrere Stellwerte zur Einstellung von einem oder mehreren, der Gasturbine zugeführten Brennstoffteilströmen. Die einzelnen Werte können dabei an unterschiedlichen Stellen in der Gasturbine gemessen bzw. eingestellt werden.

Wird als technisches System eine Gasturbine modelliert, so umfassen die zweiten Zustandsvektoren vorzugsweise eine oder mehrere der folgenden Zustandsvariablen:
einen oder mehrere Emissionswerte von Stickoxiden und/oder von Kohlenmonoxid; einen oder mehrere Parameter, welche Vibrationen der Brennkammer der Gasturbine beschreiben.

Das mit dem oben beschriebenen Verfahren gelernte neuronale Netz kann anschließend zum Schätzen bzw. zur Prognose von zweiten Zustandsvektoren eingesetzt werden. Demzufolge umfasst die Erfindung auch ein Verfahren zum rechnergestützten Schätzen von Zuständen eines technischen Systems, wobei das technische System durch das Lernen eines neuronalen Netzes basierend auf dem erfindungsgemäßen Verfahren modelliert ist und ein oder mehrere zweite Zustandsvektoren des technischen Systems über das gelernte neuronale Netz basierend auf einem oder mehreren ersten Zustandsvektoren des technischen Systems bestimmt werden.

Die Erfindung betrifft darüber hinaus ein Computerprogrammprodukt mit einem auf einem maschinenlesbaren Träger gespeicherten Programmcode zur Durchführung des erfindungsgemäßen Verfahrens, wenn das Programm auf einem Rechner abläuft.

Ausführungsbeispiele der Erfindung werden nachfolgend anhand der beigefügten Figuren detailliert beschrieben.

Es zeigen:
- Fig. 1: eine schematische Darstellung der generellen, im erfindungsgemäßen Verfahren verwendeten Topologie eines Feed-Forward-Netzes; und
- Fig. 2: eine spezielle Ausführungsform eines in einer Variante des erfindungsgemäßen Verfahrens verwendeten neuronalen Netzes.

Das erfindungsgemäße Verfahren dient zur Modellierung eines technischen Systems, welches über erste und zweite Zustandsvektoren zu entsprechenden Betriebspunkten des technischen Systems beschrieben wird. Dabei wird basierend auf Trainingsdaten in der Form von bekannten ersten und zweiten Zustandsvektoren ein neuronales Netz gelernt, wobei das gelernte neuronale Netz anschließend zur Prognose von zweiten Zustandsvektoren basierend auf beliebigen, nicht in den Trainingsdaten enthaltenen ersten Zustandsvektoren verwendet werden kann. Auf diese Weise können z.B. im Realbetrieb des technischen Systems bestimmte Zustände vor deren Eintritt vorhergesagt werden bzw. bestimmte, üblicherweise durch aufwändige Messverfahren gemessene Zustände geschätzt werden, ohne dass diese separat gemessen werden müssen. Insbesondere können mit dem gelernten neuronalen Netz zweite Zustandsgrößen geschätzt bzw. prognostiziert werden, welche kritisch für den Betrieb des technischen Systems sind und beispielsweise zu einer Beschädigung des technischen Systems führen können. Somit ist es möglich, vorab entsprechende Gegenmaßnahmen, z.B. das Anhalten des technischen Systems, zu initiieren. Das mit dem erfindungsgemäßen Verfahren gelernte neuronale Netz liefert dabei eine sehr gute Modellierung des realen Verhaltens des technischen Systems. Dies wurde durch Simulationen der Erfinder nachgewiesen, wie weiter unten beschrieben wird.

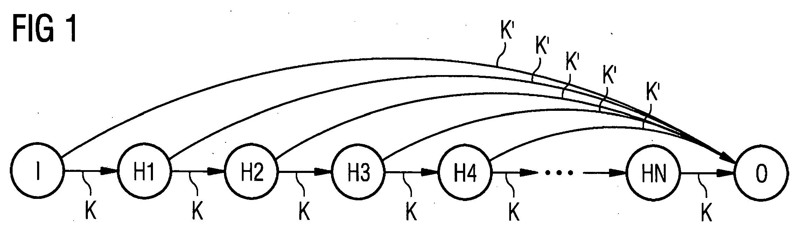

Das erfindungsgemäße Verfahren zeichnet sich durch eine neuartige, spezielle Struktur eines zu lernenden neuronalen Netzes umfassend ein kaskadiertes Netz in Kombination mit einem rekurrenten neuronalen Netz aus. Eine solche kaskadierte Netzstruktur ist allgemein in Fig. 1 wiedergegeben. Das kaskadierte Netz stellt dabei ein sog. Feed-Forward-Netz dar, welches die Eigenschaft aufweist, dass Neuronenausgaben nur in Verarbeitungsrichtung von einer Eingangsschicht über versteckte Schichten zu einer Ausgangsschicht geleitet werden. In dem Netz der Fig. 1 ist die Eingangsschicht mit Bezugszeichen I und die Ausgangsschicht mit Bezugszeichen 0 bereichnet. Die dazwischen liegenden Schichten stellen versteckte Schichten dar und sind mit H1, H2, ..., HN bezeichnet. Gemäß Fig. 1 umfasst jede Schicht ein einzelnes Cluster aus einer Vielzahl von Neuronen, wobei die Neuronen der Eingangsschicht I einen ersten Zustandsvektor eines technischen Systems und die Neuronen der Ausgangsschicht 0 einen zweiten Zustandsvektor des technischen Systems darstellen. Demgegenüber repräsentieren die Neuronen in den versteckten Schichten versteckte Zustände des technischen Systems.

Wie sich aus Fig. 1 ergibt, sind die einzelnen, benachbarten Schichten des Netzes über Konnektoren K in Vorwärtsrichtung des Netzes miteinander verbunden. Diese Konnektoren koppeln die einzelnen Schichten des neuronalen Netzes mit entsprechenden Gewichten in der Form von Gewichtsmatrizen. Die einzelnen Neuronencluster der versteckten Schichten verwenden eine nicht lineare Aktivierungsfunktion, wobei üblicherweise als Aktivierungsfunktion eine Sigmoidfunktion, wie z.B. der Tangens Hyperbolicus, verwendet wird.

Im Unterschied zu einem herkömmlichen Feed-Forward-Netz zeichnet sich das Netz der Fig. 1 dadurch aus, dass weitere Konnektoren K' mit entsprechenden Gewichten vorgesehen sind, wobei die einzelnen Konnektoren jeweils eine Neuronenschicht umfassend die Eingangsschicht I sowie die erste bis vorletzte versteckte Schicht (d.h. die Schichten H1 bis HN-1) mit der Ausgangsschicht 0 verbinden. Die einzelnen Konnektoren K' stellen somit Überbrückungskonnektoren im Sinne der Ansprüche dar, denn sie verbinden immer zwei Neuronenschichten unter Überbrückung zumindest einer versteckten Schicht. Diese kaskadierte Struktur hat den Vorteil, dass sie auch bei einer großen Anzahl von versteckten Schichten mit einem einfachen überwachten Lernverfahren, insbesondere mit einem Gradientenabstiegsverfahren, wie z.B. Error-Backpropagation, gelernt werden kann und dabei gleichzeitig sehr gut das Verhalten des zu Grunde liegenden technischen Systems modelliert. Im Unterschied hierzu muss man bei herkömmlichen Feed-Forward-Netzen mit einer Vielzahl von versteckten Schichten zur Erreichung einer guten Modellierung des technischen Systems aufwändige Lernverfahren einsetzen, bei denen zunächst mit unüberwachtem Lernen jede Schicht gelernt wird und anschließend über ein Gradientenabstiegsverfahren die Parameter an die Trainingsdaten angepasst werden.

In einer besonders bevorzugten Ausführungsform der Erfindung werden mehrere Netzstrukturen der Fig. 1 mit einer rekurrenten neuronalen Netzstruktur verknüpft, bei der auch Konnektoren innerhalb einer Schicht auftreten können. Dadurch wird insbesondere die Möglichkeit geschaffen, Training-Patterns in der Form von ersten und zweiten Zustandsvektoren zu mehreren zeitlich aufeinander folgenden Betriebspunkten des technischen Systems zu verwenden und damit auch eine Prognose von mehreren zukünftigen zweiten Zustandsvektoren zu ermöglichen. Hierdurch kann mit hoher Genauigkeit das dynamische Verhalten des technischen Systems in der Zukunft vorhergesagt werden.

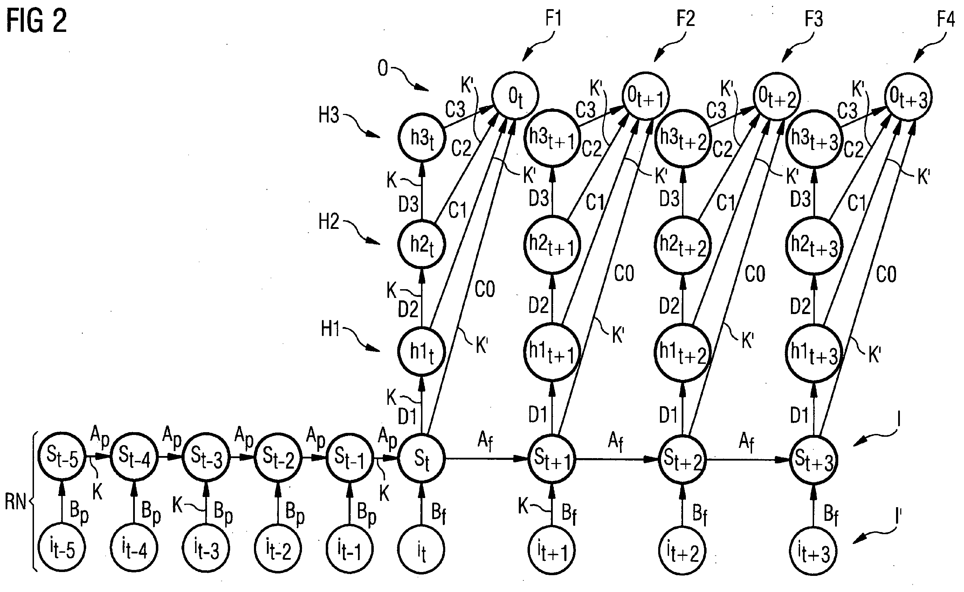

Fig. 2 zeigt eine Kombination mehrerer Feed-Forward-Netze der Fig. 1 mit einer rekurrenten neuronalen Netzstruktur. Die Struktur des Netzes der Fig. 2 ist dabei an die Struktur der neuronalen Netze angelehnt, welche in den deutschen Patentanmeldungen mit den Nummern 10 2007 001 026 und 10 2010 011 221 beschrieben sind. Die rekurrente Netzstruktur ist in Fig. 2 mit RN bezeichnet und umfasst die Eingangsschicht I' sowie die versteckte Schicht I. Diese Netzstruktur ist mit vier Feed-Forward-Netzen F1, F2, F3 und F4 gekoppelt, wobei jedes Netz in seiner Struktur dem Netz der Fig. 1 entspricht und entsprechende Überbrückungskonnektoren K' aufweisen. Gemäß Fig. 2 werden alle anderen Konnektoren, die keine Überbrückungskonnektoren darstellen, mit Bezugszeichen K bezeichnet, wobei jedoch aus Übersichtlichkeitsgründen nur teilweise das Bezugszeichen K für die Konnektoren verwendet wird. Die Konnektoren K und K' verbinden wiederum einzelne Neuronencluster über Gewichte in der Form von Gewichtsmatrizen, wobei nunmehr für alle Konnektoren die entsprechenden Gewichtsmatrizen angegeben sind.

In der Ausführungsform der Fig. 2 wird eine Zeitreihe von ersten Zustandsvektoren des technischen Systems betrachtet, die sich über vergangene Betriebspunkte t-5, t-4 usw. zum aktuellen Betriebspunkt t und von dort zu drei zukünftigen Betriebspunkten t+1, t+2 und t+3 erstrecken. Dabei existiert zu jedem dieser Betriebspunkte ein entsprechender erster Zustandsvektor iₜ₋₅, iₜ₋₄, ..., iₜ₊₃. Diese Zeitreihe von ersten Zustandsvektoren wird beim Lernen des neuronalen Netzes berücksichtigt, d.h. jeweilige Zeitabschnitte umfassend diese Zustandsvektoren werden als Trainingsdaten zum Lernen des Netzes verwendet, wobei die Trainingsdaten ferner die entsprechenden zweiten Zustandsvektoren oₜ, oₜ₊₁, oₜ₊₂ und oₜ₊₃ umfassen, welche in Fig. 2 jeweils eine Ausgangsschicht der Feed-Forward-Netze F1, F2, F3 und F4 bilden.

Die einzelnen ersten Zustandsvektoren der Eingangsschicht I' des rekurrenten neuronalen Netzes RN sind mit entsprechenden versteckten Zuständen sₜ₋₅, sₜ₋₄, ..., sₜ₊₃ in der Form versteckter Zustandsvektoren der versteckten rekurrenten Schicht I gekoppelt. Dabei werden für die Konnektoren die gleichen Gewichte Bₚ für vergangene erste Zustandsvektoren und die gleichen Gewichte B_{f} für den aktuellen und zukünftige erste Zustandsvektoren verwendet. Die versteckten Zustandsvektoren sind ferner untereinander über Konnektoren verbunden, wobei die Konnektoren zwischen vergangenen Zustandsvektoren sₜ₋₅, sₜ₋₄ usw. bzw. dem letzten vergangenen Zustandsvektoren sₜ₋₁ und dem aktuellen Zustandsvektoren sₜ die gleichen Gewichte Aₚ aufweisen. Ebenso weisen die Konnektoren, die sich in zukünftige versteckte Zustände sₜ₊₁, sₜ₊₂ usw. erstrecken, die gleichen Gewichte A_{f} auf.

In der Ausführungsform der Fig. 2 werden als kaskadierte Feed-Forward-Netze F1 bis F4 Strukturen mit drei versteckten Schichten verwendet, wobei jedes Feed-Forward-Netz in einer jeweiligen versteckten Schicht einen Neuronencluster enthält. Die Neuronencluster der versteckten Schichten des Feed-Forward-Netzes F1 sind dabei mit h1ₜ, h2ₜ und h3ₜ bezeichnet, die Neuronencluster der versteckten Schichten des Feed-Forward-Netzes F2 mit h1ₜ₊₁, h2ₜ₊₁ und h3ₜ₊₁. In Analogie wurden entsprechende Bezeichnungen für die weiteren Neuronencluster der versteckten Schichten der Feed-Forward-Netze F3 und F4 verwendet. Wie sich aus Fig. 2 ergibt, sind die Zustände der Eingangsschicht der einzelnen Feed-Forward-Netze F1 bis F4 nunmehr versteckte Zustandsvektoren der versteckten Schicht I des rekurrenten neuronalen Netzes RN. Das heißt, für das Netz F1 wird die Eingangsschicht durch den Zustandsvektor sₜ gebildet, für das Netz F2 durch den Zustandsvektor sₜ₊₁ usw.

Für die Feed-Forward-Netze F1 bis F4 sind für die einzelnen Konnektoren wiederum die entsprechenden Gewichtsmatrizen angegeben. Man erkennt, dass die einander entsprechenden Konnektoren der jeweiligen Feed-Forward-Netze die gleichen Gewichtsmatrizen verwenden. Insbesondere wird für die Konnektoren zwischen der Eingangsschicht I und der ersten versteckten Schicht H1 die Gewichtsmatrix D1 verwendet, für die Konnektoren zwischen der ersten versteckten Schicht H1 und der zweiten versteckten Schicht H2 die Gewichtsmatrix D2, für die Konnektoren zwischen der zweiten versteckten Schicht H2 und der dritten versteckten Schicht H3 die Gewichtsmatrix D3 und für die Konnektoren zwischen der dritten versteckten Schicht H3 und der Ausgangsschicht 0 die Gewichtsmatrix C3. Ebenso werden die gleichen Gewichte für einander entsprechende Überbrückungskonnektoren in den einzelnen Feed-Forward-Netzen eingesetzt. Das heißt, für die Konnektoren zwischen der Eingangsschicht I und der Ausgangsschicht 0 wird die Gewichtsmatrix CO verwendet, für die Konnektoren zwischen der ersten versteckten Schicht H1 und der Ausgangsschicht 0 die Gewichtsmatrix C1 und für die Konnektoren zwischen der zweiten versteckten Schicht H2 und der Ausgangsschicht 0 die Gewichtsmatrix C2.

Die Netzstruktur der Fig. 2 wurde von den Erfindern basierend auf Trainingsdaten betreffend den Betrieb einer Gasturbine getestet. Im Unterschied zur Darstellung der Fig. 2 wurden dabei Feed-Forward-Netze mit neun anstatt drei versteckten Schichten verwendet. Zum Lernen wurden insgesamt in etwa 400000 Training-Patterns in der Form entsprechender Zeitreihen der ersten Zustandsvektoren iₜ₋₅, ..., iₜ₊₃ und der zweiten Zustandsvektoren oₜ, ..., oₜ₊₃ eingesetzt. Zur Überprüfung, ob das gelernte neuronale Netz den tatsächlichen Betrieb des technischen Systems widerspiegelt, wurden mit dem gelernten neuronalen Netz geschätzte zweite Zustände mit bekannten zweiten Zuständen des technischen Systems verglichen, wobei für den Vergleich in etwa 100000 Patterns herangezogen wurden.

Als Zustandsvariablen der ersten Zustandsvektoren wurden verschiedene Umweltgrößen und Stellgrößen der Gasturbine, wie z.B. verschiedene Temperaturen und Gasdrucke sowie Einstellungen von der Turbine zugeführten Brennstoffteilströmen berücksichtigt. Als Zustandsvariablen der zweiten Zustandsvektoren wurden in einer Simulation Emissionen von Stickoxiden und Kohlenmonoxid und in einer anderen Simulation die Amplituden von Brennkammervibrationen in verschiedenen akustischen Frequenzen berücksichtigt. Die mit dem gelernten erfindungsgemäßen Netz erzielten Ergebnisse wurden dabei mit Ergebnissen eines dreischichtigen und vierschichtigen Netzes verglichen, wobei diese Netze analog zu Fig. 2 aufgebaut sind, jedoch keine Konnektoren K' umfassen. Für das dreischichtige Netz existiert dabei nur die versteckte Schicht I ohne die weiteren versteckten Schichten H1 bis H3. Demgegenüber existiert für das vierschichtige Netz neben der Schicht I auch die versteckte Schicht H1. Der Lernprozess wurde für das erfindungsgemäße Netz und die Vergleichsnetze mehrere Male wiederholt, um signifikante Ergebnisse zu erzielen.

Im Vergleich zu dem dreischichtigen Netz wurde mit dem erfindungsgemäßen kaskadierten Netz eine um 14% höhere durchschnittliche Genauigkeit und eine um 12% höhere Genauigkeit für den erfolgreichsten Lernprozess erreicht. Darüber hinaus wurde eine um 13% höhere Genauigkeit für den am Wenigsten erfolgreichsten Lernprozess erreicht. Diese Ergebnisse zeigen klar, dass das erfindungsgemäße kaskadierte Netz eine deutlich bessere Modellierung des Verhaltens einer Gasturbine im Vergleich zu einem dreischichtigen Netz ermöglicht.

Verglichen mit dem vierschichtigen Netz wurde für das erfindungsgemäße kaskadierte Netz eine um 8% höhere durchschnittliche Genauigkeit, eine um 5% höhere Genauigkeit für den erfolgreichsten Lernprozess und eine um 18% höhere Genauigkeit für den am wenigsten erfolgreichen Lernprozess erreicht. Somit ist das vierschichtige Netz besser zur Modellierung einer Gasturbine als das dreischichtige Netz geeignet. Nichtsdestotrotz ist das kaskadierte Netz der Erfindung immer noch deutlich besser als das vierschichtige Netz. Darüber hinaus ist das erfindungsgemäße Netz auch robuster, denn die Streuung der Genauigkeiten der verschiedenen Lernprozesse war für das kaskadierte Netz geringer als für das vierschichtige Netz.

Wie sich aus en obigen Ausführungen ergibt, eignet sich das erfindungsgemäße Verfahren, welches auf dem Lernen einer kaskadierten neuronalen Netzstruktur basiert, sehr gut zur Modellierung von technischen Systemen, wobei das Lernen auf einfache Weise mit einem herkömmlichen Gradientenabstiegsverfahren bewirkt werden kann. Ein entsprechend gelerntes neuronales Netz umfassend diese kaskadierte Netzstruktur kann dann sehr gut im Rahmen des Realbetriebs bzw. der Simulation eines technischen Systems eingesetzt werden, um Betriebszustände des technischen Systems vorherzusagen.

## Patentansprüche

1. Verfahren zur rechnergestützten Modellierung eines technischen Systems, bei dem:
- der Betrieb des technischen Systems für eine Vielzahl von Betriebspunkten (t-5, t-4, ..., t+3) jeweils durch einen ersten Zustandsvektor (iₜ₋₅, iₜ₋₄, ..., iₜ₊₃) mit einer oder mehreren ersten Zustandsvariablen und durch einen zweiten Zustandsvektor (oₜ, oₜ₊₁, ..., oₜ₊₃) mit einer oder mehreren zweiten Zustandsvariablen beschrieben wird;
- das technische System durch das Lernen eines neuronalen Netzes umfassend zumindest ein Feed-Forward-Netz (F1, F2, ..., F4) basierend auf Trainingsdaten aus bekannten ersten und zweiten Zustandsvektoren (iₜ₋₅, iₜ₋₄, ..., iₜ₊₃; oₜ, oₜ₊₁, ..., oₜ₊₃) für mehrere Betriebspunkte (t-5, t-4, ..., t+3) modelliert wird;
- wobei das zumindest eine Feed-Forward-Netz (F1, F2, ..., F4) mehrere Neuronenschichten umfassend eine Eingangsschicht (I), zumindest eine versteckte Schicht (H1, H2, H3) und eine Ausgangsschicht (0) enthält, wobei die Neuronenschichten untereinander über Konnektoren (K, K') mit jeweiligen Gewichten (C0, C1, ..., D2, D3) verbunden sind und die Eingangsschicht (I) mit zumindest einem ersten Zustandsvektor (iₜ₋₅, iₜ₋₄, ..., iₜ₊₃) und die Ausgangsschicht (0) mit zumindest einem zweiten Zustandsvektor (oₜ, oₜ₊₁, ..., oₜ₊₃) verknüpft ist;
**dadurch gekennzeichnet, dass**
- zumindest ein Konnektor (K') des zumindest einen Feed-Forward-Netzes (F1, F2, ..., F4) ein Überbrückungskonnektor (K') ist, der eine Neuronenschicht unter Überbrückung zumindest einer versteckten Schicht (H1, H2, H3) mit der Ausgangsschicht (0) verbindet,
- das zumindest eine Feed-Forward-Netz (F1, F2, ..., F4) eine Mehrzahl von versteckten Schichten (H1, H2, H3) umfasst und jede nicht direkt mit der Ausgangsschicht (0) verbundene versteckte Schicht (H1, H2) über einen Überbrückungskonnektor (K') mit der Ausgangsschicht (0) verbunden ist;
- das neuronale Netz ferner ein rekurrentes, mit dem zumindest einen Feed-Forward-Netz (F1, F2, ..., F4) gekoppeltes neuronales Netz (RN) umfassend eine Eingangsschicht (I') und eine rekurrente versteckte Schicht (I) enthält, wobei die Eingangsschicht (I') des rekurrenten neuronalen Netzes (RN) erste Zustandsvektoren (iₜ₋₅, iₜ₋₄, ..., iₜ₊₃) zu zeitlich aufeinander folgenden Betriebspunkten (t-5, t-4, ..., t+3) des technischen Systems umfassend einen aktuellen und einen oder mehrere vergangene Betriebspunkte beinhaltet, wobei jeder erste Zustandsvektor (iₜ₋₅, iₜ₋₄, ..., iₜ₊₃) zum jeweiligen Betriebspunkt der Eingangsschicht (I') des rekurrenten neuronalen Netzes (RN) über einen Konnektor (K) mit entsprechendem Gewicht (Bₚ, B_{f}) mit einem versteckten Zustandsvektor (Sₜ₋₅, Sₜ₋₄, ..., Sₜ₊₃) zum jeweiligen gleichen Betriebspunkt der rekurrenten versteckten Schicht (I) des rekurrenten neuronalen Netzes (RN) verbunden ist, wobei der versteckte Zustandsvektor (sₜ) zum aktuellen Betriebspunkt (t) die Eingangsschicht (I) eines des zumindest einen Feed-Forward-Netzes (F1, F2, ..., F4) repräsentiert und die Ausgangsschicht (0) dieses Feed-Forward-Netzes (F1, F2, ..., F4) den zweiten Zustandsvektor (oₜ) zum aktuellen Betriebspunkt (t) repräsentiert.

2. Verfahren nach Anspruch 1, **dadurch gekennzeichnet, dass** die Eingangsschicht (I) des zumindest einen Feed-Forward-Netzes (F1, F2, ..., F4) über einen Überbrückungskonnektor (K') mit der Ausgangsschicht (0) verbunden ist.

3. Verfahren nach einem der vorhergehenden Ansprüche, bei dem das neuronale Netz über ein Gradientenabstiegsverfahren und insbesondere über Error-Backpropagation gelernt wird.

4. Verfahren nach einem der vorhergehenden Ansprüche, **dadurch gekennzeichnet, dass** die Eingangsschicht (I') des rekurrenten neuronalen Netzes (RN) ferner einen oder mehrere erste Zustandsvektoren (iₜ₊₁, ..., iₜ₊₃) zu zeitlich aufeinander folgenden zukünftigen Betriebspunkten (t+1, ..., t+3) des technischen Systems umfasst und jeder erste Zustandsvektor (i_{t+1,} ..., iₜ₊₃) zu einem zukünftigen Betriebspunkt (t+1, ..., t+3) über einen Konnektor (K) mit entsprechendem Gewicht (B_{f}) mit einem versteckten Zustandsvektor (sₜ₊₁, ..., sₜ₊₃) zu dem zukünftigen Betriebspunkt (t+1, ..., t+3) der rekurrenten versteckten Schicht (I) des rekurrenten neuronalen Netzes (RN) verbunden ist, wobei jeder versteckte Zustandsvektor (sₜ₊₁, ..., sₜ₊₃) zu einem zukünftigen Betriebspunkt (t+1, ..., t+3) die Eingangsschicht (I) eines des zumindest einen Feed-Forward-Netzes (F1, F2, ..., F4) für den zukünftigen Betriebspunkt (t+1, ..., t+3) bildet, wobei die Ausgangsschicht (0) jedes Feed-Forward-Netzes (F1, F2, ..., F4) für einen zukünftigen Betriebspunkt (t+1, ..., t+3) den zweiten Zustandsvektor (oₜ₊₁, ..., oₜ₊₃) zu dem zukünftigen Betriebspunkt (t+1, ..., t+3) repräsentiert.

5. Verfahren nach Anspruch 4, **dadurch gekennzeichnet, dass** die Konnektoren (K) aller Feed-Forward-Netze (F1, F2, ..., F4), welche einander entsprechende Neuronenschichten verbinden, die gleichen Gewichte (C0, C1, ..., D2, D3) aufweisen.

6. Verfahren nach einem der vorhergehenden Ansprüche, **dadurch gekennzeichnet, dass** die Konnektoren (K) zwischen der Eingangsschicht (I') des rekurrenten neuronalen Netzes (RN) und der rekurrenten versteckten Schicht (I) des rekurrenten neuronalen Netzes (RN) zu vergangenen Betriebspunkten (t-5, ..., t-1) die gleichen ersten Gewichte (Bₚ) aufweisen.

7. Verfahren nach Anspruch 4 oder 5 oder nach Anspruch 6 in Kombination mit Anspruch 4, **dadurch gekennzeichnet, dass** die Konnektoren (K) zwischen der Eingangsschicht (I') des rekurrenten neuronalen Netzes (RN) und der rekurrenten versteckten Schicht (I) des rekurrenten neuronalen Netzes (RN) zum aktuellen und zu zukünftigen Betriebspunkten (t, ..., t+3) die gleichen zweiten Gewichte (B_{f}) aufweisen.

8. Verfahren nach einem der vorhergehenden Ansprüche, **dadurch gekennzeichnet, dass** die Konnektoren (K) der versteckten rekurrenten Schicht (I) des rekurrenten neuronalen Netzes (RN), welche sich aus versteckten Zustandsvektoren (sₜ₋₅, ..., sₜ₋₁) zu vergangenen Betriebspunkten (t-5, t-4, ..., t-1) erstrecken, die gleichen dritten Gewichte (Aₚ) aufweisen.

9. Verfahren nach einem der Ansprüche 4 bis 8, **dadurch gekennzeichnet, dass** die Konnektoren (K) der versteckten rekurrenten Schicht (I) des rekurrenten neuronalen Netzes (RN), welche sich in versteckte Zustandsvektoren (sₜ₊₁, sₜ₊₂, sₜ₊₃) zu zukünftigen Betriebspunkten (t+1, t+2, t+3) erstrecken, die gleichen vierten Gewichte (A_{f}) aufweisen.

10. Verfahren nach einem der vorhergehenden Ansprüche, **dadurch gekennzeichnet, dass** als technisches System eine Turbine, insbesondere eine Gasturbine, modelliert wird.

11. Verfahren nach Anspruch 10, **dadurch gekennzeichnet, dass** die ersten Zustandsvektoren (iₜ₋₅, iₜ₋₄, ..., iₜ₊₃) der Gasturbine eine oder mehrere der folgenden Zustandsvariablen der Gasturbine umfassen:
einen oder mehrere Temperaturwerte an oder in der Gasturbine, insbesondere einen oder mehrere Brenngastemperaturwerte, einen oder mehrere Gasdruckwerte an oder in der Gasturbine, insbesondere einen oder mehrere Brenngasdruckwerte, einen oder mehrere Stellwerte zur Einstellung von einem oder mehreren, der Gasturbine zugeführten Brennstoffteilströmen.

12. Verfahren nach Anspruch 10 oder 11, **dadurch gekennzeichnet, dass** die zweiten Zustandsvektoren (oₜ, oₜ₊₁, ..., oₜ₊₃) eine oder mehrere der folgenden Zustandsvariablen umfassen:
einen oder mehrere Emissionswerte von Stickoxiden und/oder von Kohlenmonoxid; einen oder mehrere Parameter, welche Vibrationen der Brennkammmer der Gasturbine beschreiben.

13. Verfahren zum rechnergestützten Schätzen von Zuständen eines technischen Systems, **dadurch gekennzeichnet, dass** das technische System durch das Lernen eines neuronalen Netzes gemäß einem Verfahren nach einem der vorhergehenden Ansprüche modelliert ist, wobei ein oder mehrere zweite Zustandsvektoren (oₜ, oₜ₊₁, ..., oₜ₊₃) des technischen Systems über das gelernte neuronale Netz basierend auf einem oder mehreren ersten Zustandsvektoren (iₜ₋₅, iₜ₋₄, ..., iₜ₊₃) des technischen Systems bestimmt werden.

14. Computerprogrammprodukt mit einem auf einem maschinenlesbaren Träger gespeicherten Programmcode zur Durchführung eines Verfahrens nach einem der vorhergehenden Ansprüche, wenn das Programm auf einem Rechner abläuft.

## Claims

1. Method for the computer-assisted modelling of a technical system, in which:
- the operation of the technical system is described in each case for a plurality of operating points (t-5, t-4, ..., t+3) by a first state vector (iₜ₋₅, iₜ₋₄, ..., iₜ₊₃) with one or more first state variables and by a second state vector (oₜ, oₜ₊₁, ..., oₜ₊₃) with one or more second state variables;
- the technical system is modelled by training a neural network comprising at least one feed-forward network (F1, F2, ..., F4) based on training data from known first and second state vectors (iₜ₋₅, iₜ₋₄, ..., iₜ₊₃; oₜ, oₜ₊₁, ..., oₜ₊₃) for a plurality of operating points (t-5, t-4, ..., t+3);
- wherein the at least one feed-forward network (F1, F2, ..., F4) contains a plurality of neural layers comprising one input layer (I), at least one hidden layer (H1, H2, H3) and one output layer (0), wherein the neural layers are interconnected by way of connectors (K, K') with respective weights (C0, C1, ..., D2, D3) and the input layer (I) is linked with at least one first state vector (iₜ₋₅, iₜ₋₄, ..., iₜ₊₃) and the output layer (0) with at least one second state vector (oₜ, oₜ₊₁, ..., oₜ₊₃);
**characterised in that**
- at least one connector (K') of the at least one feed-forward network (F1, F2, ..., F4) is a bridging connector (K') which connects a neural layer with the output layer (0) while bridging at least one hidden layer (H1, H2, H3),
- the at least one feed-forward network (F1, F2, ..., F4) comprises a plurality of hidden layers (H1, H2, H3) and each hidden layer (H1, H2) not connected directly with the output layer (0) is connected with the output layer (0) by way of a bridging connector (K');
- the neural network furthermore contains a recurrent neural network (RN), coupled with the at least one feed-forward network (F1, F2, ..., F4), comprising an input layer (I') and a recurrent hidden layer (I), wherein the input layer (I') of the recurrent neural network (RN) contains first state vectors (iₜ₋₅, iₜ₋₄, ..., iₜ₊₃) at chronologically sequential operating points (t-5, t-4, ..., t+3) of the technical system comprising one current and one or more past operating points, wherein each first state vector (iₜ₋₅, iₜ₋₄, ..., iₜ₊₃) at the respective operating point of the input layer (I') of the recurrent neural network (RN) is connected by way of a connector (K) with corresponding weight (Bₚ, B_{f}) with a hidden state vector (sₜ₋₅, sₜ₋₄, ..., sₜ₊₃) at the respective same operating point of the recurrent hidden layer (I) of the recurrent neural network (RN), wherein the hidden state vector (sₜ) at the current operating point (t) represents the input layer (I) of the at least one feed-forward network (F1, F2, ..., F4) and the output layer (0) of said feed-forward network (F1, F2, ..., F4) represents the second state vector (oₜ) at the current operating point (t).

2. Method according to claim 1, **characterised in that** the input layer (I) of the at least one feed-forward network (F1, F2, ..., F4) is connected with the output layer (0) by way of a bridging connector (K').

3. Method according to one of the preceding claims, wherein the neural network is trained by way of a gradient descent method and in particular by way of error back-propagation.

4. Method according to one of the preceding claims, **characterised in that** the input layer (I') of the recurrent neural network (RN) furthermore comprises one or more first state vectors (iₜ₊₁, ..., iₜ₊₃) at chronologically sequential future operating points (t+1, ..., t+3) of the technical system and each first state vector (iₜ₊₁, ..., iₜ₊₃) at a future operating point (t+1, ..., t+3) is connected by way of a connector (K) with corresponding weight (B_{f}) with a hidden state vector (sₜ₊₁, ..., sₜ₊₃) at the future operating point (t+1, ..., t+3) of the recurrent hidden layer (I) of the recurrent neural network (RN), wherein each hidden state vector (sₜ₊ᵢ, ..., sₜ₊₃) at a future operating point (t+1, ..., t+3) forms the input layer (I) of the at least one feed-forward network (F1, F2, ..., F4) for the future operating point (t+1, ..., t+3), wherein the output layer (0) of each feed-forward network (F1, F2, ..., F4) for a future operating point (t+1, ..., t+3) represents the second state vector (oₜ₊₁, ..., oₜ₊₃) at the future operating point (t+1, ..., t+3).

5. Method according to claim 4, **characterised in that** the connectors (K) of all feed-forward networks (F1, F2, ..., F4) which connect neural layers corresponding to one another have the same weights (CO, C1, ..., D2, D3).

6. Method according to one of the preceding claims, **characterised in that** the connectors (K) between the input layer (I') of the recurrent neural network (RN) and the recurrent hidden layer (I) of the recurrent neural network (RN) at past operating points (t-5, ..., t-1) have the same first weights (Bₚ).

7. Method according to claim 4 or 5 or according to claim 6 in combination with claim 4, **characterised in that** the connectors (K) between the input layer (I') of the recurrent neural network (RN) and the recurrent hidden layer (I) of the recurrent neural network (RN) at the current and at future operating points (t, ..., t+3) have the same second weights (B_{f}).

8. Method according to one of the preceding claims, **characterised in that** the connectors (K) of the hidden recurrent layer (I) of the recurrent neural network (RN), which extend out of hidden state vectors (sₜ₋₅, ..., sₜ₋₁) at past operating points (t-5, t-4, ..., t-1), have the same third weights (Aₚ).

9. Method according to one of claims 4 to 8, **characterised in that** the connectors (K) of the hidden recurrent layer (I) of the recurrent neural network (RN), which extend into hidden state vectors (sₜ₊₁, sₜ₊₂, sₜ₊₃) at future operating points (t+1, t+2, t+3), have the same fourth weights (A_{f}).

10. Method according to one of the preceding claims, **characterised in that** a turbine, in particular a gas turbine, is modelled as a technical system.

11. Method according to claim 10, **characterised in that** the first state vectors (iₜ₋₅, iₜ₋₄, ..., iₜ₊₃) of the gas turbine comprise one or more of the following state variables of the gas turbine:
one or more temperature values at or in the gas turbine, in particular one or more fuel gas temperature values, one or more gas pressure values at or in the gas turbine, in particular one or more fuel gas pressure values, one or more control values for setting one or more of the partial fuel flows fed to the gas turbine.

12. Method according to claim 10 or 11, **characterised in that** the second state vectors (oₜ, oₜ₊₁, ..., oₜ₊₃) comprise one or more of the following state variables:
one or more emission values for nitrogen oxides and/or for carbon monoxide; one or more parameters which describe vibrations of the combustion chamber of the gas turbine.

13. Method for the computer-assisted estimation of states of a technical system, **characterised in that** the technical system is modelled by the training of a neural network in accordance with a method according to one of the preceding claims, wherein one or more second state vectors (oₜ, oₜ₊₁, ..., oₜ₊₃) of the technical system are determined by way of the trained neural network on the basis of one or more first state vectors (iₜ₋₅, iₜ₋₄, ..., iₜ₊₃) of the technical system.

14. Computer program product having program code stored on a machine-readable medium for carrying out a method according to one of the preceding claims when the program runs on a computer.

## Revendications

1. Procédé de modélisation d'un système technique assistée par ordinateur, selon lequel :
- l'exploitation du système technique est décrite pour une pluralité de points de service (t-5, t-4, ..., t+3) respectivement par un premier vecteur d'état (iₜ₋₅, iₜ₋₄, ..., iₜ₊₃) avec une ou plusieurs premières variables d'état et par un deuxième vecteur d'état (oₜ, oₜ₊₁, ..., oₜ₊₃) avec une ou plusieurs deuxièmes variables d'état ;
- le système technique est modélisé par l'apprentissage d'un réseau neuronal comprenant au moins un réseau feed-forward (F1, F2, ..., F4) sur la base de données d'apprentissage de premiers et deuxièmes vecteurs d'état connus (iₜ₋₅, iₜ₋₄, ..., iₜ₊₃ ; oₜ, oₜ₊₁, .., oₜ₊₃) pour plusieurs points de service (t-5, t-4, ..., t+3) ;
- l'au moins un réseau feed-forward (F1, F2, ..., F4) contenant plusieurs couches de neurones comprenant une couche d'entrée (I), au moins une couche cachée (H1, H2, H3) et une couche de sortie (0), les couches de neurones étant reliées entre elles par des connecteurs (K, K') présentant des poids respectifs (C0, C1, ..., D2, D3) et la couche d'entrée (I) étant associée à au moins un premier vecteur d'état (iₜ₋₅, iₜ₋₄, ..., iₜ₊₃) et la couche de sortie (0), à au moins un deuxième vecteur d'état (oₜ, oₜ₊₁, .., oₜ₊₃),
**caractérisé en ce que**
- au moins un connecteur (K') de l'au moins un réseau feed-forward (F1, F2, ..., F4) est un connecteur de pontage (K') qui relie une couche de neurones à la couche de sortie (0) en pontant au moins une couche cachée (H1, H2, H3) ;
- l'au moins un réseau feed-forward (F1, F2, ..., F4) comprend une pluralité de couches cachées (H1, H2, H3) et chaque couche cachée (H1, H2) non directement reliée à la couche de sortie (0) est reliée à la couche de sortie (0) par un connecteur de pontage (K') ;
- le réseau neuronal contient en outre un réseau neuronal (RN) récurrent couplé à l'au moins un réseau feed-forward (F1, F2, ..., F4), comprenant une couche d'entrée (I') et une couche cachée récurrente (I), la couche d'entrée (I') du réseau neuronal récurrent (RN) contenant de premiers vecteurs d'état (iₜ₋₅, iₜ₋₄, ..., iₜ₊₃) à des points de service (t-5, t-4, ..., t+3) du système technique qui se succèdent dans le temps et incluent un point de service actuel et un ou plusieurs points de service antérieurs, chaque premier vecteur d'état (iₜ₋₅, iₜ₋₄, ..., iₜ₊₃) au point de service respectif de la couche d'entrée (I') du réseau neuronal récurrent (RN) étant relié par un connecteur (K) présentant un poids correspondant (Bₚ, B_{f}) à un vecteur d'état caché (sₜ₋₅, sₜ₋₄, ..., sₜ₊₃) au même point de service respectif de la couche cachée récurrente (I) du réseau neuronal récurrent (RN), le vecteur d'état caché (sₜ) au point de service actuel (t) représentant la couche d'entrée (I) d'un de l'au moins un réseau feed-forward (F1, F2, ..., F4) et la couche de sortie (0) de ce réseau feed-forward (F1, F2, ..., F4) représentant le deuxième vecteur d'état (oₜ) au point de service actuel (t).

2. Procédé selon la revendication 1, **caractérisé en ce que** la couche d'entrée (I) de l'au moins un réseau feed-forward (F1, F2, ..., F4) est reliée à la couche de sortie (0) par l'intermédiaire d'un connecteur de pontage (K').

3. Procédé selon l'une des revendications précédentes, selon lequel le réseau neuronal est appris par l'intermédiaire d'une méthode de descente de gradient et, plus particulièrement, par l'intermédiaire d'une rétropropagation d'erreur.

4. Procédé selon l'une des revendications précédentes, **caractérisé en ce que** la couche d'entrée (I') du réseau neuronal récurrent (RN) comprend en outre un ou plusieurs premiers vecteurs d'état (iₜ₊₁, ..., iₜ₊₃) à des points de service futurs (t+1, ..., t+3) du système technique qui se succèdent dans le temps et **en ce que** chaque premier vecteur d'état (iₜ₊₁, ..., iₜ₊₃) à un point de service futur (t+1, ..., t+3) est relié par un connecteur (K) présentant un poids correspondant (B_{f}) à un vecteur d'état caché (sₜ₊₁, ..., sₜ₊₃) au point de service futur (t+1, ..., t+3) de la couche cachée récurrente (I) du réseau neuronal récurrent (RN), chaque vecteur d'état caché (sₜ₊₁, ..., sₜ₊₃) à un point de service futur (t+1, ..., t+3) formant la couche d'entrée (I) d'un de l'au moins un réseau feed-forward (F1, F2, ..., F4) pour le point de service futur (t+1, ..., t+3), la couche de sortie (0) de chaque réseau feed-forward (F1, F2, ..., F4) représentant, pour un point de service futur (t+1, ..., t+3), le deuxième vecteur d'état (oₜ₊₁, ..., oₜ₊₃) au futur point de service (t+1, ..., t+3).

5. Procédé selon la revendication 4, **caractérisé en ce que** les connecteurs (K) de tous les réseaux feed-forward (F1, F2, ..., F4) qui relient des couches de neurones qui se correspondent présentent les mêmes poids (C0, C1, ..., D2, D3).

6. Procédé selon l'une des revendications précédentes, **caractérisé en ce que** les connecteurs (K) entre la couche d'entrée (I') du réseau neuronal récurrent (RN) et la couche cachée récurrente (I) du réseau neuronal récurrent (RN) à des points de service antérieurs (t-5, ..., t-1) présentent les mêmes premiers poids (Bₚ).

7. Procédé selon la revendication 4 ou 5 ou selon la revendication 6 en combinaison avec la revendication 4, **caractérisé en ce que** les connecteurs (K) entre la couche d'entrée (I') du réseau neuronal récurrent (RN) et la couche cachée récurrente (I) du réseau neuronal récurrent (RN) au point de service actuel et à des points de service futurs (t, ..., t+3) présentent les mêmes deuxièmes poids (B_{f}).

8. Procédé selon l'une des revendications précédentes, **caractérisé en ce que** les connecteurs (K) de la couche récurrente cachée (I) du réseau neuronal récurrent (RN) qui s'étendent depuis des vecteurs d'état cachés (sₜ₋₅, ..., sₜ₋₁) à des points de service antérieurs (t-5, t-4, ..., t-1) présentent les mêmes troisièmes poids (Aₚ).

9. Procédé selon l'une des revendications 4 à 8, **caractérisé en ce que** les connecteurs (K) de la couche récurrente cachée (I) du réseau neuronal récurrent (RN) qui s'étendent vers des vecteurs d'état cachés (sₜ₊₁, sₜ₊₂, sₜ₊₃) à des points de service futurs (t+5, t+2, t+3) présentent les mêmes quatrièmes poids (A_{f}).

10. Procédé selon l'une des revendications précédentes, **caractérisé en ce qu'**est modélisée, en tant que système technique, une turbine, et plus particulièrement une turbine à gaz.

11. Procédé selon la revendication 10, **caractérisé en ce que** les premiers vecteurs d'état (iₜ₋₅, iₜ₋₄, ..., iₜ₊₃) de la turbine à gaz comprennent une ou plusieurs des variables d'état suivantes de la turbine à gaz : une ou plusieurs valeurs de température sur ou dans la turbine à gaz, en particulier une ou plusieurs valeurs de température de gaz combustible, une ou plusieurs valeurs de pression de gaz sur ou dans la turbine à gaz, en particulier une ou plusieurs valeurs de pression de gaz combustible, une ou plusieurs valeurs de réglage pour le réglage d'un ou de plusieurs flux partiels de combustible amenés à la turbine à gaz.

12. Procédé selon la revendication 10 ou 11, **caractérisé en ce que** les deuxièmes vecteurs d'état (oₜ, oₜ₊₁, ..., oₜ₊₃) comprennent une ou plusieurs des variables d'état suivantes : une ou plusieurs valeurs d'émission d'oxydes d'azote et/ou de monoxyde de carbone, un ou plusieurs paramètres décrivant des vibrations de la chambre de combustion de la turbine à gaz.

13. Procédé d'estimation assistée par ordinateur d'états d'un système technique, **caractérisé en ce que** le système technique est modélisé par l'apprentissage d'un réseau neuronal selon un procédé selon l'une des revendications précédentes, un ou plusieurs deuxièmes vecteurs d'état (oₜ, oₜ₊₁, ..., oₜ₊₃) du système technique étant déterminés par l'intermédiaire du réseau neuronal appris sur la base d'un ou de plusieurs premiers vecteurs d'état (iₜ₋₅, iₜ₋₄, ..., iₜ₊₃) du système technique.

14. Produit de programme informatique comportant un code de programme stocké sur un support lisible par machine aux fins de l'exécution d'un procédé selon l'une des revendications précédentes lorsque le programme tourne sur un ordinateur.
